# EUROPEAN PATENT SPECIFICATION

(11) **EP 1 920 648 B1**
(45) Date of publication and mention of the grant of the patent: **27.01.2010**
(21) Application number: 07119310.6
(22) Date of filing: 25.10.2007
(51) Int. Cl.: A01D 89/00

(54) **Pickup device for agricultural machines, in particular for round balers**
Aufnehmer für landwirtschaftliche Maschinen, insbesondere für Rundballenpressen
Ramasseur pour machines agricoles, en particulier pour roto-presses

(30) Priority: 10.11.2006 IT RM20060611
(43) Date of publication of application: 14.05.2008
(73) Proprietor: Gallignani S.p.A., 48026 Russi RA (IT)
(72) Inventor: Ravaglia, Paolo, Bagnacavallo RA 48012 (IT)
(74) Representative: Manfrin, Marta

(56) References cited:
- EP-A- 1 642 491
- DE-A1- 3 315 033
- US-A- 1 815 327

## Description

The present invention relates to a pickup device, suitable for agricultural machines, in particular round balers, apt to pick up tiers of straw, hay, forages and similar materials and to the compression of such products in bales with rectangular or round section.

In agriculture, the use of round balers for the pick-up of mown materials and the compression thereof in bales is very widespread. Typically, such machines, usually in the front position, have a pickup device picking up the mown materials from the ground and conveying them, directly or through other members, to a bale-forming chamber arranged above such pickup device.

In order to maximize the pick-up effectiveness, it is preferable that the pickup device is as wide as possible, so that the mown material on the whole width of each tier can be picked up with a single run.

However, the conditions for transporting the bales by road impose the maximum size of each bale not to exceed 120-150 centimetres and, consequently, when pickup devices with higher width are used, it is necessary to envisage specific Archimedean screw-like devices which laterally compress the material before the inletting thereof into the forming chamber, so as to comply with such size limit.

Furthermore, the pickup devices built according to the known art are usually equipped with small wheels, which are fastened to the pickup device itself. Such wheels are adjustable and allow the pickup device to follow the ground unevenesses. From the practice it is known that the most effective location for such wheels is next to the transverse axis of rotation of the pickup device itself. Consequently, such wheels cannot be effectively arranged in front of the pickup body, but, on the contrary, they are usually arranged on the sides of the pickup body itself.

It should be also understood that the road transportation, in accordance with the laws in force in Italy, imposes the width of the round baler machine not to exceed 2.55 meters. Such limit represents a constraint for the maximum width of the pickup device too. In fact, if the pickup device exceeds the abovementioned size, it should be disassembled prior to road transportation and subsequently it should be assembled again onto the round baler prior to a new pick-up operation on the field. This disassembling and assembling operation is complex and toilsome, thus it should be avoided, if possible.

Considering what has just been illustrated, the pickup devices of the known agricultural machines have such a system that allows the abovementioned wheels to be easily removed from the working position and placed elsewhere, so that the pickup device, once deprived of the wheels, does not exceed the abovementioned maximum width of 2.55 meters, thus complying with the laws in force. Nevertheless, however easier it may be, also the disassembling and assembling operation of the sensing wheels is toilsome. In practice, often such disassembling is not performed, as it is considered a useless waste of time, and the consequent road transportation of the round baler machine represents a potential danger for the road traffic, as it brakes the rules.

It should also be noted that, in the pickup devices built according to the known art, the overall dimensions are quite large also due to a certain structural complexity.

More precisely, such devices use a plurality of teeth which are supported by transverse bars, which cause a roto-translational motion to the teeth by means of a cam-like system, so as to perform the pick-up operation.

The presence of such cams, together with the need to provide members apt to implement a rotational motion, requires the use of transmission wheels arranged outside the heads which support the transverse bars bearing the pickup teeth. The presence of such members, thus, requires quite large overall dimensions, in particular in terms of transverse extension of the pickup device.

Therefore, the object of the present invention is to provide a pickup device for agricultural machines, in particular round balers, apt to pick up tiers of straw, hay, forages and similar materials, comprising a central shaft, at least two transverse bars bearing a plurality of teeth, two side heads integral to the central shaft bearing said at least two transverse bars constituting a pickup body, supports allowing the rotation of said pickup body around an axis which is parallel to said at least two transverse bars, and at least one transmission wheel integral to said pickup body, characterized in that said at least one transmission wheel is directly adjacent to one of said side heads and it is fastened to said head by means of mechanical connection members.

Another object of the present invention is to provide a pickup device which, the usable pickup size being the same, has transversal dimensions that are smaller than those of the known art devices, so that the maximum width provided by the law for the road transportation is complied with by the present invention without disassemblement of any members or any other kind of intervention type being needed.

Furthermore, an other object of the present invention is to avoid the use of distinct transmission members for the rotational motion and for the rotational motion of the teeth implementing the pick-up operation.

Ultimately, an additional object of the present invention is to provide a round baler which includes a pickup device with the features described above.

A first advantage deriving from the present invention is to provide a pickup device with transversal dimensions which are smaller than those of the known art devices having the same usable width.

A second advantage resulting from the present invention is to provide a pickup device apt to road transportation and complying the law on the device transversal dimensions without the need for parts composing the device itself to be disassembled.

Another advantage resulting from the present invention is that the device is composed of a smaller number of pieces than the known art pickup devices and, in particular, the wheels for transmitting the rotational motion are placed by the heads supporting the bars which bear the pickup teeth, thus reducing the transversal dimensions of the motion transmission system.

The features and the advantages of the present invention will come evident in the following detailed description, which is given by way of example and not for limitative purpose, by referring to the enclosed drawings, wherein:
- figure 1 represents a whole perspective view of the pickup device;
- figure 2 represents a perspective view of the pickup device, wherein some components have been removed;
- figure 3 represents a magnified perspective view of an end of the pickup body and of the outer portion of the head of the pickup body itself;
- figure 4 represents a magnified perspective view of an end of the pickup body and of the inner portion of the head of the pickup body itself;
- figure 5 represents a front view of the transmission wheel;
- figure 5A represents a front view of a sector composing the transmission wheel;
- figure 6 represents a front view of a pickup device according to the known art principles (up) and of a pickup device according to the principles of the present invention (down).

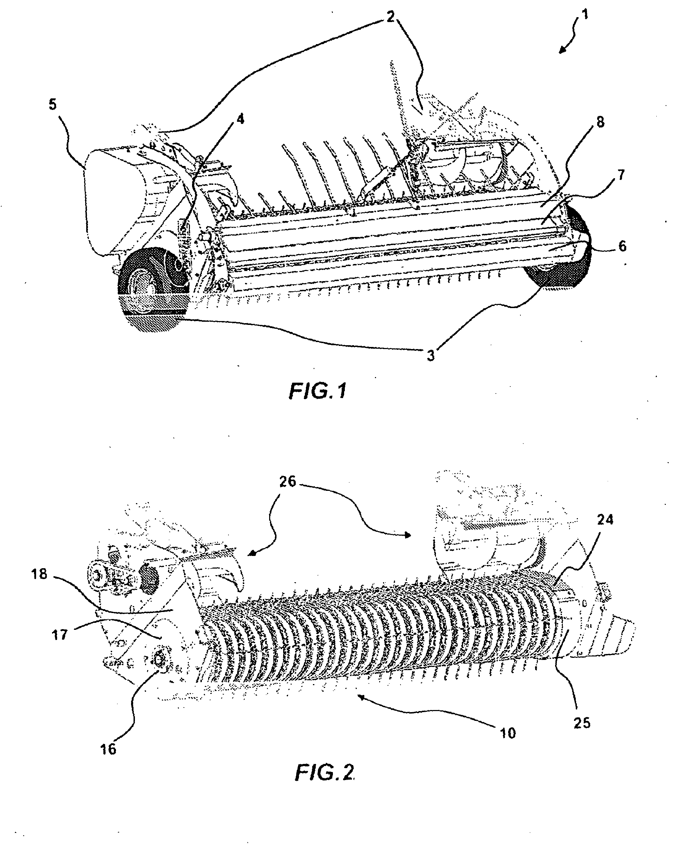

A pickup device 1 according to the present invention is represented in figure 1. Such a pickup device 1 is joined to a (not represented) round baler machine or other agricultural machine by means of brackets 2, which are equipped with a hooking device; said pickup device 1 rests on the ground thanks to suitable sensing wheels 3. The vertical position of each sensing wheel 3 with respect to the central body of the pickup device 1 can be adjusted by means of a support 4.

Figure 2 represents the same pickup device 1, from which the sensing wheels 3, a protective casing 5, feeding baffles 6 and 7 and a protection member 8 have been removed.

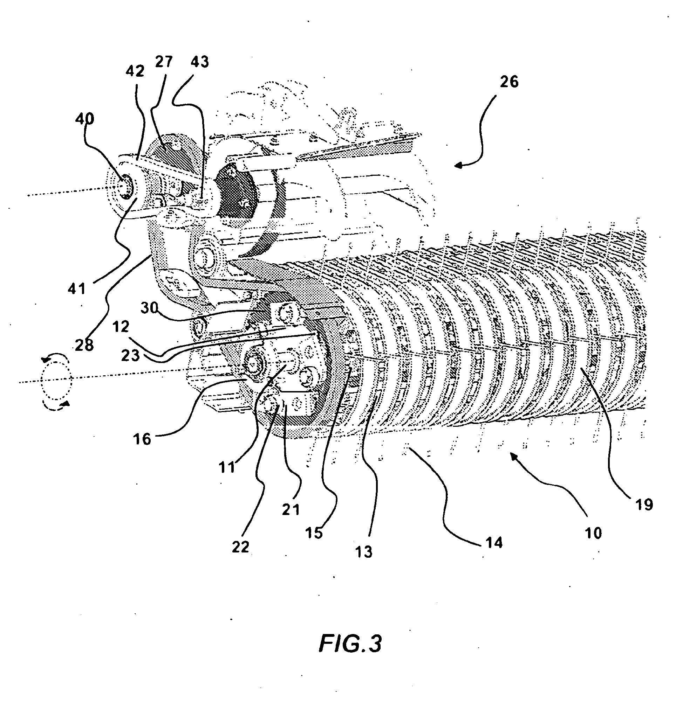

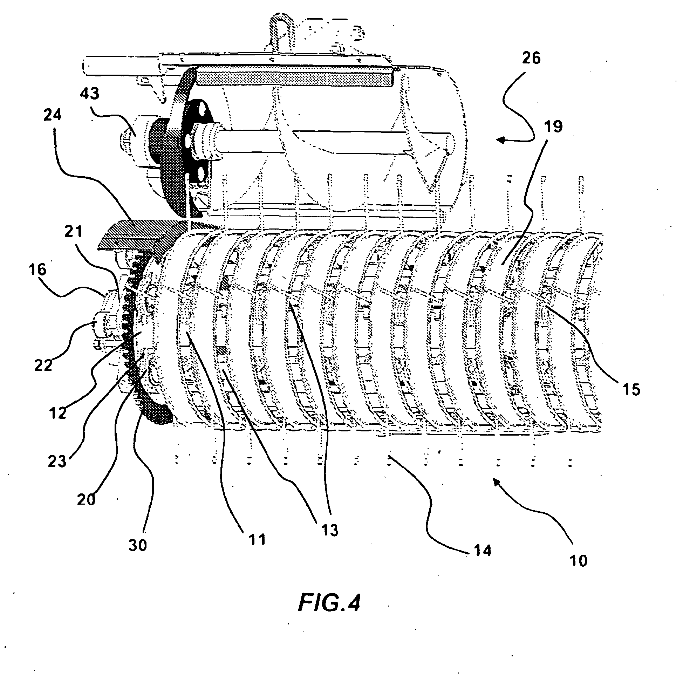

With reference to figures 3 and 4 too, the device according to the present invention comprises a revolving pickup body 10, constituted by a central shaft 11, by side heads 12 integral to said central shaft 11, by at least one transmission wheel 30 and by a plurality of transverse bars 13 bearing teeth 14. The transverse bars 13 are parallel to the central shaft 11 and they are housed in specific slots made on the peripheral band of the side heads 12. The teeth 14 can be spring-teeth, that is to say they can be connected to the respective transverse bar 13 by means of springs 15 which can be an integral portion of the tooth 14 itself, as in the here-illustrated embodiment.

Incidentally, the pickup body can further comprise intermediate flanges, that are not shown in the figure, which are connected to the central shaft and are apt to provide an additional support of the transverse bars 13, in the same way as the heads 12.

The shaft 11 of the pickup body 10 is fastened by means of bearings 16 to a supporting plate 17, which in turn is integral to a side wall 18 of the pickup device 1.

Bent strips 19 are arranged between the teeth 14 of each transverse bar 13 and are fixed with respect to the pickup device 1. Such bent strips 19 are parallel therebetween and the room between two subsequent strips 19 is covered by the teeth 14.

Each transverse bar 13 can rotate around its own longitudinal axis thanks to a respective bearing 20. Each transverse bar 13 bears a small arm 21 at both ends: an end of said small arm 21 is integral to the transverse bar 13 itself, whereas the other end of the small arm 21 bears a roller 22. Said roller 22 is apt to engage a cam-like route (which is not shown) made on the inner surface of the plate 17.

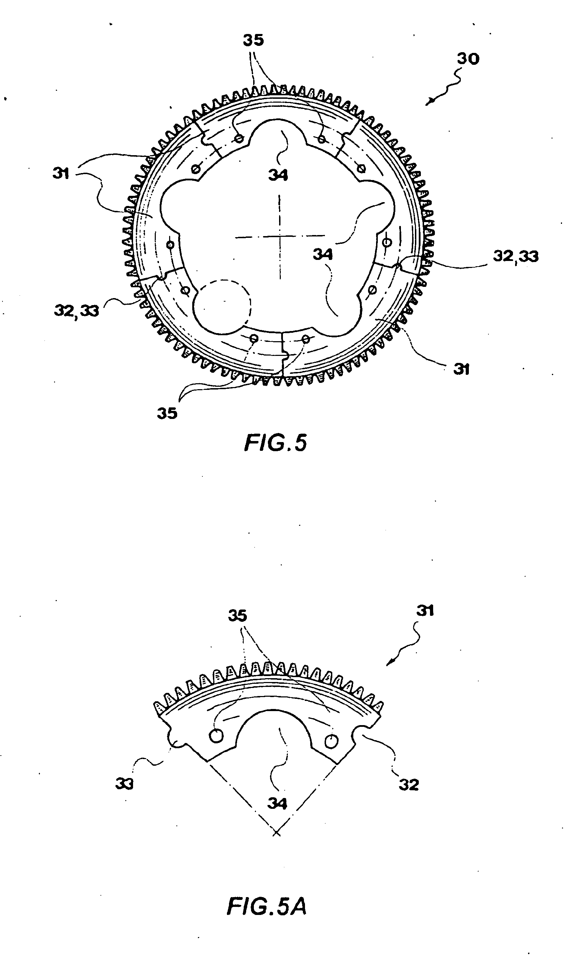

The transmission wheel 30 is adjacent to the head 12 and it is rigidly joined thereto. As it is shown in figures 5 and 5A, the transmission wheel 30 has the shape of a circular crown and it is divided into sectors 31 that are substantially identical therebetween; the number of such sectors 31 is equal to the number of the transverse bars 13. Each sector 31 has a recess 32 and a projection 33 with complementary shape, so as to allow the mutual interlocking of the sectors 31 to form the transmission wheel 30. The intrados of each sector 31 has a recess 34 to house a transverse bar 13 and/or the bearing thereof 20; each sector 31 further has at least two holes 35.

As it can be seen from figures 3 and 4, each sector 31 is fastened to the head 12 by the same mechanical connection members (in this case, bolts 23) which connect the bearings 20 of the transverse bars 13 to the head 12; such bolts 23 pass through the holes 35 of the sectors 31.

The transmission wheel 30, the bearings 20 and the small arms 21 can be inspected by removing the removable tiles 24 and 25. When the replacement of a bearing 20 is necessary, this can be done by removing the corresponding bolts 23 and by taking out the corresponding sector 31.

Such feature is particularly advantageous, as it allows the performing maintenance and repair operations in a simple and easy way. Archimedean screw-like devices 26, which compress transversally the picked-up material, are housed above the side ends of the pickup body 10.

The rotation motion is transmitted by suitable rotation means which, in the present embodiment, comprises a transmission shaft 40 transmitting the motion of the pickup body 10 by means of a driving wheel 27, a transmission chain 28 and a driven transmission wheel 30. The rotation motion is further transmitted to the Archimedean screw-like device 26 by means of the driving wheel 41, the chain 42 and the driven wheel 43. The driving wheels 27 and 41 are both integral to the transmission shaft 40.

When they are in the lower portion of the route thereof, the teeth 14 pick up the mown material from the ground. Such material is lifted, is made to slide onto the strips 19 and is conveyed to the Archimedean screws 26 and to the chamber for the bale formation in the round baler.

During the rotation of the pickup body 10, the rollers 22 follow the mentioned cam-like route made on the inner surface of the plate 17. Consequently, by means of the action of the small arms 21, a limited motion is transmitted to the transverse bars 13 so as to vary along the cam route the tilt of the teeth 14 in the radial direction, as requested by the needs for the optimal operation of the pickup device.

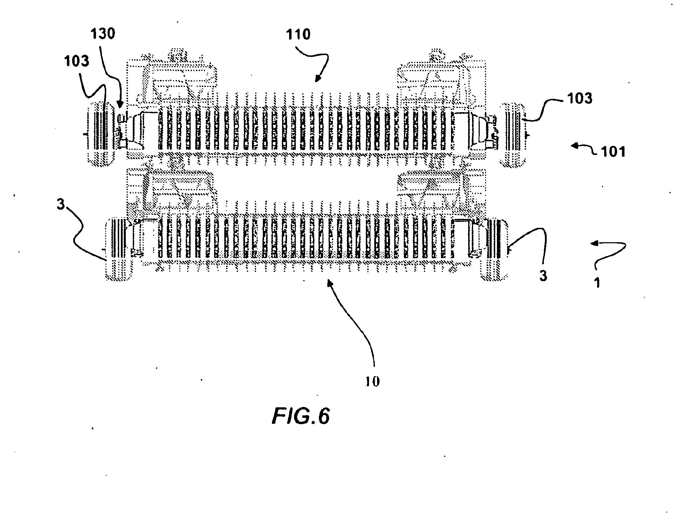

Figure 6 shows a comparison between an embodiment of a pickup device 101 according to the known art and an embodiment of a pickup device 1 according to the present invention. In the two embodiments, the usable sizes of the pickup bodies, indicated with 110 for the known art and with 10 for the present invention, are the same. The whole sizes, by also considering the sensing wheels 103 for the known art and 3 for the present invention, are different from each other and in particular the pickup device 101 has transversal overall dimensions which are larger than the pickup device 1. In fact, in the pickup device 101 the motor system 130 of the pickup body 110 is arranged outside the pickup body 110 itself and therefore the thickness of said motor system 130 increases the transversal overall dimensions. Therefore, it should be noted that, when the usable sizes of the pickup body are equal, the device 1 according to the present invention can be realized with transversal overall dimensions which are smaller than the known art.

A person skilled in the art, with the aim at satisfying additional and contingent needs, could introduce several additional modifications and variants to the above described pickup device, all of said modifications and variants being however within the protective scope of the present invention, as defined by the enclosed claims.

## Claims

1. Pickup device (1) for agricultural machines, in particular round balers, apt to pick up tiers of straw, hay, forages and similar materials, comprising a central shaft (11), at least two transverse bars (13) bearing a plurality of teeth (14), said transverse bars (13) being apt to cooperate with a cam-like mechanism apt to vary the tilt of said plurality of teeth (14), two side heads (12) integral to the central shaft (11) bearing said at least two transverse bars (13) constituting a pickup body (10), supports (16,17) allowing the rotation of said pickup body (10) around an axis parallel to said at least two transverse bars (13), at least one transmission wheel (30) integral to said pickup body (10) and rotation means of said at least one transmission wheel (30), apt to implement the rotation of said central shaft (11),
**characterized in that**
said at least one transmission wheel (30) is directly adjacent to one of said side heads (12) and is fastened to said head (12) by means of mechanical connection members (23).

2. Pickup device (1) according to claim 1, wherein said at least two transverse bars (13) can rotate around the longitudinal axis thereof being mounted onto bearings (20).

3. Pickup device (1) according to claim 2, wherein the ends (20) of each one of said at least two transverse bars (13) are integral to a small arm (21) bearing a roller (22) apt to engage said cam-like route.

4. Pickup device (1) according to any one of the preceding claims, wherein said at least one transmission wheel (30) is circular crown-shaped.

5. Pickup device (1) according to any one of the preceding claims, wherein said at least one transmission wheel (30) is constituted by two or more sectors (31).

6. Pickup device (1) according to claim 5, wherein said sectors (31) of said at least one transmission wheel (30) are substantially identical therebetween.

7. Pickup device (1) according to claim 5 or 6, wherein said sectors (31) are interlocking-like connected therebetween.

8. Pickup device (1) according to any one of claims 5 to 7, wherein each one of said sectors (31) is fastened to said side head (12) by means of mechanical connection members (23).

9. Pickup device (1) according to any one of the preceding claims, wherein said at least one transmission wheel (30) is equipped with recesses (34) for housing said at least two transverse bars (13) and/or the bearings (20) thereof.

10. Pickup device (1) according to claim 9 when depending on any one of claims 5 to 8. wherein each one of said sectors (31) is equipped with at least one of said recesses (34).

11. Pickup device (1) according to claim 2 or according to claim 2 and anyone of claims 3 to 10, wherein said mechanical connection members (23), fastening said at least one transmission wheel (30) and/or said sectors (31) to said side head (12) are the same which fasten said bearings (20) of said at least two transverse bars (13) to said side head (12).

12. Pickup device (1) according to claim 1 or 8 or 11, wherein said mechanical connection members (23) are bolts.

13. Pickup device (1) according to any one of the preceding claims, wherein said teeth (14) are spring-teeth.

14. Pickup device (1) according to any one of the preceding claims and comprising at least two adjustable sensing wheels (3).

15. Pickup device (1) according to any one of the preceding claims and comprising one or more Archimedean screw-tike devices (26).

16. Pickup device (1) according to any one of the preceding claims, wherein said rotation means comprises a transmission shaft (40) apt to transmit the motion to said pickup body (10) by means of a driving wheel (27), a transmission chain (28) and to said transmission wheel (30).

17. Pickup press comprising a pickup device (1) according to any one of the preceding claims.

## Patentansprüche

1. Aufnahmevorrichtung (1) für landwirtschaftliche Maschinen, insbesondere Rundballenpressen, die dafür ausgelegt ist, Lagen aus Stroh, Heu, Futterpflanzen und ähnlichen Materialien aufzunehmen, und die aufweist: eine Mittelwelle (11), mindestens zwei Querstege (13), die eine Vielzahl von Zinken (14) tragen, wobei die Querstege (13) dafür ausgelegt sind, mit einem nockenähnlichen Mechanismus zusammenzuwirken, der dafür ausgelegt ist, die Neigung der Vielzahl von Zinken (14) zu variieren, zwei seitliche Köpfe (12), welche mit der Mittelwelle (11) eine Einheit bilden und die mindestens zwei Querstege (13) tragen, die einen Aufnahmekörper (10) bilden, Lager (16, 17), welche die Drehung des Aufnahmekörpers (10) um eine Achse erlauben, die parallel zu den mindestens zwei Querstegen (13) verläuft, mindestens ein Übertragungsrad (30), das eine Einheit mit dem Aufnahmekörper (10) bildet, und ein Drehmittel des mindestens einen Übertragungsrads (30), das dafür ausgelegt ist, die Drehung der Mittelwelle (11) zu verwirklichen,
**dadurch gekennzeichnet, dass**
das mindestens eine Übertragungsrad (30) direkt an einen der seitlichen Köpfe (13) angrenzt und mittels mechanischer Verbindungselemente (23) an dem Kopf (12) befestigt ist.

2. Aufnahmevorrichtung (1) nach Anspruch 1, wobei die mindestens zwei Querstreben (13) sich um ihre Längsachse drehen können, die an Lagern (20) befestigt ist.

3. Aufnahmevorrichtung (1) nach Anspruch 2, wobei die Enden (20) jeder der mindestens zwei Querstege (13) eine Einheit mit einem kleinen Arm (21) bilden, der eine Walze (22) trägt, die dafür ausgelegt ist, in die nockenartige Route einzugreifen.

4. Aufnahmevorrichtung (1) nach einem der vorangehenden Ansprüche, wobei das mindestens eine Übertragungsrad (30) wie eine kreisförmige Krone geformt ist.

5. Aufnahmevorrichtung (1) nach einem der vorangehenden Ansprüche, wobei das mindestens eine Übertragungsrad (30) aus zwei oder mehr Sektoren (31) besteht.

6. Aufnahmevorrichtung (1) nach Anspruch 5, wobei die Sektoren (31) des mindestens einen Übertragungsrads (30) untereinander im Wesentlichen identisch sind.

7. Aufnahmevorrichtung (1) nach Anspruch 5 oder 6, wobei die Sektoren (31) durch Ineinandergreifen aneinander befestigt sind.

8. Aufnahmevorrichtung (1) nach einem der Ansprüche 5 bis 7, wobei jeder der Sektoren (31) mittels mechanischer Verbindungselemente (23) am seitlichen Kopf (12) befestigt ist.

9. Aufnahmevorrichtung (1) nach einem der vorangehenden Ansprüche, wobei das mindestens eine Übertragungsrad (30) mit Aussparungen (34) für die Unterbringung der mindestens zwei Querstreben (13) und/oder der Lager (20) versehen ist.

10. Aufnahmevorrichtung nach Anspruch 9, wenn dieser auf einen der Ansprüche 5 bis 8 bezogen ist, wobei jeder der Sektoren (31) mit mindestens einem dieser Aussparungen (34) versehen ist.

11. Aufnahmevorrichtung nach Anspruch 2 oder nach Anspruch 2 und einem der Ansprüche 3 bis 10, wobei die mechanischen Verbindungselemente (23), die das mindestens eine Übertragungsrad (30) und/oder die Sektoren (31) am seitlichen Kopf (12) befestigen, die Gleichen sind, die die Lager (20) der mindestens zwei Querstreben (13) am seitlichen Kopf (12) befestigen.

12. Aufnahmevorrichtung (1) nach einem der Ansprüche 1 oder 8 oder 11, wobei die mechanischen Verbindungselemente (23) Bolzen sind.

13. Aufnahmevorrichtung (1) nach einem der vorangehenden Ansprüche, wobei die Zinken (14) Federzinken sind.

14. Aufnahmeeinrichtung (1) nach einem der vorangehenden Ansprüche, ferner mindestens zwei einstellbare Sensorräder (3) aufweisend.

15. Aufnahmevorrichtung (1) nach einem der vorangehenden Ansprüche, ferner eine oder mehrere Einrichtungen (26) nach Art einer Archimedischen Schraube aufweisend.

16. Aufnahmevorrichtung (1) nach einem der vorangehenden Ansprüche, wobei das Drehmittel eine Übertragungswelle (40) umfasst, die dafür ausgelegt ist, die Bewegung mittels eines Antriebsrads (27), einer Übertragungskette (28) und des Übertragungsrads (30) auf den Aufnahmekörper (10) zu übertragen.

17. Aufnahmepresse, eine Aufnahmevorrichtung (1) nach einem der vorangehenden Ansprüche aufweisend.

## Revendications

1. Ramasseur (1) pour machines agricoles, en particulier les roto-presses, approprié pour ramasser des niveaux de paille, de foin, de fourrage et des matières similaires, comprenant un arbre central (11), au moins deux barres transversales (13) supportant une pluralité de dents (14), lesdites barres transversales (13) étant appropriées pour coopérer avec un mécanisme en forme de came approprié pour modifier l'inclinaison de ladite pluralité de dents (14), deux têtes latérales (12) solidaires de l'arbre central (11) supportant lesdites au moins deux barres transversales (13) constituant un corps de ramassage (10), des supports (16, 17) permettant la rotation dudit corps de ramassage (10) autour d'un axe parallèle auxdites au moins deux barres transversales (13), au moins une roue de transmission (30) solidaire dudit corps de ramassage (10) et des moyens de rotation de ladite au moins une roue de transmission (30), appropriés pour mettre en oeuvre la rotation dudit arbre central (11),
**caractérisé en ce que** :
ladite au moins une roue de transmission (30) est directement adjacente à l'une desdites têtes latérales (12) et est fixée sur ladite tête (12) au moyen d'éléments de raccordement mécaniques (23).

2. Ramasseur (1) selon la revendication 1, dans lequel lesdites au moins deux barres transversales (13) peuvent tourner autour de leur axe longitudinal qui est monté sur des paliers (20).

3. Ramasseur (1) selon la revendication 2, dans lequel les extrémités (20) de chacune desdites au moins deux barres transversales (13) sont solidaires d'un petit bras (21) supportant un rouleau (22) approprié pour mettre en prise ladite voie en forme de came.

4. Ramasseur (1) selon l'une quelconque des revendications précédentes, dans lequel ladite au moins une roue de transmission (30) a une forme de couronne circulaire.

5. Ramasseur (1) selon l'une quelconque des revendications précédentes, dans lequel ladite au moins une roue de transmission (30) est constituée par deux secteurs (31) ou plus.

6. Ramasseur (1) selon la revendication 5, dans lequel lesdits secteurs (31) de ladite au moins une roue de transmission (30) sont sensiblement identiques entre eux.

7. Ramasseur (1) selon la revendication 5 ou 6, dans lequel lesdits secteurs (31) sont raccordés sous forme de verrouillage entre eux.

8. Ramasseur (1) selon l'une quelconque des revendications 5 à 7, dans lequel chacun desdits secteurs (31) est fixé sur ladite tête latérale (12) au moyen d'éléments de raccordement mécaniques (23).

9. Ramasseur (1) selon l'une quelconque des revendications précédentes, dans lequel ladite au moins une roue de transmission (30) est équipée avec des évidements (34) pour loger lesdites au moins deux barres transversales (13) et/ou ses paliers (20).

10. Ramasseur (1) selon la revendication 9, lorsqu'elle dépend de l'une quelconque des revendications 5 à 8, dans lequel chacun desdits secteurs (31) est équipé avec au moins l'un desdits évidements (34).

11. Ramasseur (1) selon la revendication 2 ou selon la revendication 2 et l'une quelconque des revendications 3 à 10, dans lequel lesdits éléments de raccordement mécaniques (23) fixant ladite au moins une roue (30) et/ou lesdits secteurs (31) à ladite tête latérale (12), sont les mêmes que ceux qui fixent lesdits paliers (20) desdites au moins deux barres transversales (13) à ladite tête latérale (12).

12. Ramasseur (1) selon la revendication 1 ou 8 ou 11, dans lequel lesdits éléments de raccordement mécaniques (23) sont des boulons.

13. Ramasseur (1) selon l'une quelconque des revendications précédentes, dans lequel lesdites dents (14) sont des dents à ressort.

14. Ramasseur (1) selon l'une quelconque des revendications précédentes et comprenant au moins deux roues de détection ajustables (3).

15. Ramasseur (1) selon l'une quelconque des revendications précédentes et comprenant un ou plusieurs dispositifs de type vis d'Archimède (26).

16. Ramasseur (1) selon l'une quelconque des revendications précédentes, dans lequel lesdits moyens de rotation comprennent un arbre de transmission (40) approprié pour transmettre le mouvement audit corps de ramassage (10) au moyen d'une roue d'entraînement (27), une chaîne de transmission (28) et à ladite roue de transmission (30).

17. Ramasseur presse comprenant un ramasseur (1) selon l'une quelconque des revendications précédentes.
